# EUROPÄISCHE PATENTSCHRIFT

(11) **EP 3 614 810 B1**
(45) Veröffentlichungstag und Bekanntmachung des Hinweises auf die Patenterteilung: **25.05.2022**
(21) Anmeldenummer: 19191503.2
(22) Anmeldetag: 13.08.2019
(51) Int. Cl.: H05B 6/68, H04W 74/08, H04W 84/12

(54) **ADAPTIVE LEISTUNGSSTEUERUNG EINES MIKROWELLENOFENS FÜR KOEXISTENZ MIT FUNKNETZWERKEN**
ADAPTIVE POWER CONTROL OF A MICROWAVE OVEN FOR COEXISTENCE WITH RADIO NETWORKS
COMMANDE DE PERFORMANCE ADAPTATIVE D'UN FOUR À MICRO-ONDES POUR UNE COEXISTENCE AVEC DES RÉSEAUX RADIO

(30) Priorität: 23.08.2018 DE 102018120573
(43) Veröffentlichungstag der Anmeldung: 26.02.2020
(73) Patentinhaber: Miele & Cie. KG, 33332 Gütersloh (DE)
(72) Erfinder: Langhammer, Nils, 33415 Verl (DE); Deter, Frank, 59302 Oelde (DE); Blömker, Olaf, 48231 Warendorf (DE); Junkmann, Michael, 33397 Rietberg (DE); Bömke, Christian, 33415 Verl (DE)

(56) Entgegenhaltungen:
- US-A1- 2007 280 332
- US-A1- 2009 005 092
- US-A1- 2009 156 121
- US-A1- 2017 188 388

## Beschreibung

Die Erfindung betrifft ein Haushaltsgerät, mit einem Magnetron, welches dazu eingerichtet ist, im Betrieb Mikrowellen zu erzeugen, einem Netzteil und einer Steuerung, welche dazu eingerichtet ist, dem Netzteil die Leistung für den Betrieb des Magnetrons vorzugeben.

Ferner betrifft die Erfindung ein Verfahren zum Steuern des Betriebs eines Haushaltsgeräts, mit den Schritten: Erzeugen von Mikrowellen durch ein Magnetron des Haushaltsgeräts und Steuern der Leistung für den Betrieb des Magnetrons durch eine Steuerung des Haushaltsgeräts.

Insbesondere betrifft die Erfindung eine adaptive Leistungssteuerung für Hausgeräte mit einer integrierten Mikrowelle sowie separate Mikrowellengeräte. Die Mikrowelle enthält einen Hochfrequenzgenerator im 2.4 GHz ISM-Band. Eine Variante besteht aus einem Magnetron, sowie einem Hochspannungsschaltnetzteil. Sie wird zur Erwärmung von Speisen mittels hochfrequenter Strahlung genutzt.

Bei der Erwärmung werden mitunter sehr hohe Leistungen im Bereich von mehreren 100 W bis einigen 1000 W verwendet. Diese Leistung wird in Form von hochfrequenter Strahlung an das Gargut abgegeben. Parallel zu der Mikrowelle operieren im gleichen Frequenzband verschiedene Funknetzwerke, wie zum Beispiel WLAN (IEEE 802.11), Bluetooth oder ZigBee. Diese Funknetzwerke nutzen jedoch nur sehr geringe Sendeleistungen von maximal 100 mW, die um ein Vielfaches niedriger als die des Mikrowellengeräts sind. Dies hat zur Folge, dass das Funknetzwerk bei Betrieb des Mikrowellengeräts signifikant gestört werden kann, bis hin zum vollständigen Ausfall.

Mit der Einführung vernetzter Geräte, der Steuerung über Smartphones und weiteren digitalen Anwendungen auf Basis von 2.4 GHz steigt die Praxisrelevanz dieser Störfälle. Durch den Mikrowellenbetrieb können sowohl eine WLAN-Station in dem Mikrowellengerät selbst als auch eine benachbarte WLAN-Station in einem anderen Gerät gestört werden. Das Problem kann für zwei Arten von Mikrowellengeräten noch besser skizziert werden.

Wird die Mikrowelle mit einem Trafonetzteil betrieben, ist bei einer Netzspannung von 50 Hz die Hochfrequenzstrahlung für eine Zeitdauer von ca. 10 ms bei der positiven Halbwelle aktiv und danach für ca. 10 ms inaktiv. In der inaktiven Zeit kann ein WLAN-System oder allgemein 2.4 GHz-System Daten übertragen, da der Funkkanal nicht gestört ist. Der Durchsatz reduziert sich jedoch um 50%.

Der zweite viel kritischere Fall ist ein Mikrowellengerät mit einem Schaltnetzteil. Hierbei sind die Pausen deutlich kürzer. Zum Beispiel folgt auf ca. 8 ms Mikrowellenbetrieb eine kurze Pause von ca. 2 ms. Diese Pausen sind jedoch für manche WLAN-Access Points (AP) und WLAN-Stationen (STA) zu kurz, um sinnvoll Daten zu übertragen. Insbesondere die sogenannten IEEE 802.11 Beacon-Frames, die in einem Zeitintervall von ∼100 ms geschickt werden, sind für den Betrieb eines WLAN-Netzwerkes sehr wichtig. Der Betrieb ist nur möglich, wenn eine gewisse Anzahl dieser Frames in den 2 ms Sendepause erfolgreich übertragen wird. Die Wahrscheinlichkeit, dass die Pause jedoch zufällig vom WLAN-AP getroffen wird, ist sehr gering.

US 2017/188388 A1 (NAKAJIMA ATSUSHI [JP] ET AL) 29. Juni 2017 (2017-06-29) beschreibt einHaushaltsgerät mit einem Magnetron, welches dazu eingerichtet ist, im Betrieb Mikrowellen zu erzeugen; einem Netzteil, und einer Steuerung, welche dazu eingerichtet ist, dem Netzteil (16) die Leistung für den Betrieb des Magnetrons (12) vorzugeben.

Hier greift die Erfindung an, die eine adaptive Steuerung der Leistung eines Mikrowellengeräts umfasst, so dass WLAN Betrieb parallel zum Mikrowellenbetrieb zuverlässig erfolgen kann und somit eine Koexistenz gewährleistet wird.

Haushaltgeräte mit Mikrowelle nutzen für neue Entwicklungen häufig Schaltnetzteile (Inverter). Ein Grund ist, dass mit solchen Invertern ein Betrieb mit echten Leistungsstufen unterhalb der Maximalleistung des Mikrowellenerzeugers möglich ist, wohingegen trafobasierte Lösungen in der Regel mit einer PWM-artigen Steuerung arbeiten (müssen).

Ist das Gerät zudem vernetzt, kann es sein, dass die Vernetzungsfunktionen durch die Mikrowelle signifikant beeinträchtigt werden, sofern das gleiche Frequenzband (2.4 GHz) verwendet wird. Eine Alternative wäre die Verwendung von WLAN mit 5 GHz.

Die ursprüngliche Lösung mit einem Trafo-Netzteil hatte technologiebedingt längere Pausen, so dass das Problem dort kaum auftritt. Manche Hersteller von Access Points haben eine Erkennung für Mikrowellen und legen die Beacons gezielt in die Pause von 2 ms, so dass die Störanfälligkeit geringer wird. Hier wird versucht, auf den Störer zu reagieren. Bei vielen Access Points treten jedoch häufiger Probleme auf.

Die Verwendung von 5 GHz-WLAN erfordert eine komplexere Hardware und ist in der Reichweite deutlich eingeschränkt gegenüber 2.4 GHz. Des Weiteren ist die Approbation bei 5 GHz deutlich aufwändiger und teurer.

Eine Verbesserung über den Access Point kann nur vom Hersteller des Access Points umgesetzt werden. Viele Geräte operieren jedoch normalerweise als WLAN-Station, so dass die Lösung hier nicht funktioniert, da diese auf den Empfang der Beacons angewiesen sind. Werden diese vom Access Point ungünstig geschickt, kollidieren diese mit dem Mikrowellenbetrieb und können daher nicht empfangen werden. Dies hat einen Verbindungsverlust zur Folge. Zudem muss der Access Point mitunter weitere WLAN-Stationen bedienen und kann sich somit nicht nur nach dem Mikrowellengerät richten.

Die der Erfindung zugrundeliegende Aufgabe besteht somit darin, die Beeinträchtigung der Kommunikation in einem Funknetzwerk aufgrund des Betriebs eines Mikrowellengeräts zumindest zu verringern.

Die Aufgabe wird gelöst durch ein Haushaltsgerät der eingangs genannten Art, wobei die Steuerung des erfindungsgemäßen Haushaltsgeräts dazu eingerichtet ist, in einem Koexistenzmodus die dem Netzteil vorgegebene Leistung für den Betrieb des Magnetrons zeitweise derart zu reduzieren, dass eine Störung der Kommunikation in einem Beacon-Frames verwendenden Funknetzwerk durch die von dem Magnetron erzeugten Mikrowellen reduziert oder verhindert wird.

Die Erfindung macht sich die Erkenntnis zunutze, dass während der temporären Leistungsreduzierung Beacon-Frames übertragen werden können, sodass Störungen in der Kommunikation der sich in dem Funknetzwerk befindenden Geräte verringert oder sogar vermieden werden. Das Haushaltsgerät verwendet einen Koexistenz-Algorithmus, welcher die Kommunikation innerhalb des Funknetzwerkes bei gleichzeitigem Mikrowellenbetrieb erlaubt.

Wenn das Haushaltsgerät selbst an der Kommunikation über das Funknetzwerk teilnimmt, wird durch die temporäre Leistungsreduzierung die Störung der eigenen Kommunikation verringert oder vermieden. Aufgrund der Leistungsreduzierung kann es zwar zu verringerten Datenraten kommen, diese sind für Hausgeräteanwendungen jedoch ausreichend. Anders als im Stand der Technik wird der Funkbetrieb eines Mikrowellengeräts somit nicht wesentlich durch die Mikrowellen gestört.

Die Steuerung des Haushaltsgeräts ist vorzugsweise dazu eingerichtet, die dem Netzteil vorgegebene Leistung für den Betrieb des Magnetrons zeitweise derart zu reduzieren, dass einer WLAN-Station des Funknetzwerks der Empfang von Beacon-Frames ermöglicht wird, welche von einem WLAN-Access Point des Funknetzwerks versendet werden. Das Funknetzwerk kann alternativ zu WLAN auch auf einer anderen 2.4 GHz-Technologie, wie etwa ZigBee oder Bluetooth, basieren. Das Magnetron und das Netzteil sind vorzugsweise Bestandteile eines Hochfrequenzgenerators. Das Magnetron erzeugt vorzugsweise Mikrowellen im 2.4 GHz ISM-Band. Die temporäre Leistungsreduzierung kann auch zu einem temporären Abschalten des Magnetrons führen. Das Netzteil des Haushaltsgeräts ist vorzugsweise ein Schaltnetzteil. Alternativ ist das Netzteil des Haushaltsgeräts ein Trafonetzteil. Die Steuerung des Haushaltsgeräts ist vorzugsweise eine elektronische Steuerungseinrichtung.

Durch die Erfindung wird die Mikrowelle mit einer Steuerung ausgestattet, die eine Koexistenz mit WLAN oder allgemein auf 2.4 GHz basierenden Technologien (ZigBee, Bluetooth etc.) erlaubt. Diese ist zwar eingeschränkt (Datenrate ist reduziert, aber für Hausgeräteanwendungen noch völlig ausreichend), aber sie ermöglicht eine Kommunikation bei gleichzeitigem Mikrowellenbetrieb. Auch Störungen benachbarter Geräte können reduziert oder je nach benötigter Datenrate ganz verhindert werden.

In einer bevorzugten Ausführungsform des erfindungsgemäßen Haushaltsgeräts ist der Koexistenzmodus der Steuerung während des Betriebs des Haushaltsgeräts oder während des Betriebs des Magnetrons durch einen Benutzer aktivierbar. Das Haushaltsgerät kann eine Benutzerschnittstelle zum Aktivieren des Koexistenzmodus der Steuerung durch einen Benutzer aufweisen. Beispielsweise kann das Haushaltsgerät eine Eingabeeinrichtung, beispielsweise einen Touchscreen, aufweisen, über welche der Koexistenzmodus der Steuerung durch eine Benutzereingabe aktivierbar ist. Alternativ oder zusätzlich kann der Koexistenzmodus der Steuerung auch über ein mobiles Endgerät, etwa ein Smartphone, aktivierbar sein, welches signalleitend, beispielsweise über das Funknetzwerk, mit dem Haushaltsgerät verbunden ist. Durch die manuelle Aktivierbarkeit des Koexistenzmodus der Steuerung kann dieser lediglich im Bedarfsfall aktiviert werden, sodass eine Verringerung der Datenrate durch den Koexistenzmodus der Steuerung vermeidbar wird, wenn dieser nicht erforderlich ist. Alternativ kann der Koexistenzmodus der Steuerung während des Betriebs des Haushaltsgeräts oder während des Betriebs des Magnetrons auch dauerhaft aktiviert sein. Durch die automatische Aktivierung des Koexistenzmodus der Steuerung kann eine Störung der Kommunikation über das Funknetzwerk effektiv vermieden werden, ohne das weitere Maßnahmen eines Benutzers erforderlich sind. Ferner kann das Haushaltsgerät dazu eingerichtet sein, den Koexistenzmodus der Steuerung selbsttätig zu aktivieren, wenn eine Notwendigkeit der Einstellung des Koexistenzmodus der Steuerung zur Vermeidung einer Störung der Kommunikation in dem Funknetzwerk durch das Haushaltsgerät erkannt wird. Die Notwendigkeit der Einstellung des Koexistenzmodus der Steuerung zur Vermeidung einer Störung kann beispielsweise bei der Detektion von Kommunikation über das Funknetzwerk erkannt werden. Somit kommt es zu einer automatischen und bedarfsgerechten Einschaltung Koexistenzmodus der Steuerung des Haushaltsgeräts.

In einer weiteren bevorzugten Ausführungsform des erfindungsgemäßen Haushaltsgeräts ist die Steuerung dazu eingerichtet, in dem Koexistenzmodus in mehreren zeitlich beabstandeten Zeitfenstern die dem Netzteil vorgegebene Leistung für den Betrieb des Magnetrons zu reduzieren. Innerhalb der Zeitfenster können dann beispielsweise die Beacon-Frames über das Funknetzwerk übertragen werden. Durch die Übertragung der Beacon-Frames innerhalb der Zeitfenster, in welchen die Leistung für den Betrieb des Magnetrons reduziert ist, kann dann eine Kommunikationsverbindung einer oder mehrerer Geräte zu dem Funknetzwerk aufrechterhalten werden. Ferner kann innerhalb der Zeitfenster eine Kommunikation über das Funknetzwerk erfolgen. Die Zeitspannen zwischen den Zeitfenstern können konstant oder variabel sein. Die Zeitspannen zwischen den Zeitfenstern können beispielsweise im Millisekundenbereich liegen. Ferner können die zeitlich beabstandeten Zeitfenster eine konstante oder eine variable Zeitdauer haben. Die Zeitdauer der Zeitfenster kann beispielsweise im Millisekundenbereich liegen.

Es ist außerdem ein erfindungsgemäßes Haushaltsgerät vorteilhaft, bei welchem die Steuerung dazu eingerichtet ist, in dem Koexistenzmodus die zeitlich beabstandeten Zeitfenster und/oder die Zeitspannen zwischen den Zeitfenstern mit einem Zufallszeitfenster zu überlagern. Die Zufallszeitfenster können positiv oder negativ sein, sodass die zeitlich beabstandeten Zeitfenster und/oder die Zeitspannen zwischen den Zeitfenstern durch die Überlagerung verlängert oder verkürzt werden können. Die Zufallszeitfenster können im Millisekundenbereich liegen. Durch die Überlagerung mit einem Zufallszeitfenster wird die Quote erfolgreich übertragener Beacon-Frames und die Quote erfolgreich übertragener regulärer Pakete signifikant erhöht. Die zeitlich beabstandeten Zeitfenster, die Zeitspannen zwischen den Zeitfenstern, das Zufallszeitfenster und/oder die Leistungsreduzierung sind derart konfigurierbar, dass diese auf unterschiedliche Gerätetypen und verschiedene Funknetzwerke angepasst werden können. Die Konfiguration kann dabei manuell durch einen Benutzer erfolgen. Die Konfiguration kann beispielsweise über ein Userinterface des Haushaltsgeräts erfolgen. Alternativ oder zusätzlich kann das Haushaltsgerät dazu eingerichtet sein, einen Konfigurationsdatensatz von einer Datenbank abzurufen und die Konfiguration auf Basis des Konfigurationsdatensatzes selbsttätig auszuführen. Beispielsweise erlaubt das Haushaltsgerät die Einstellung eines WLAN-Koexistenzmodus, eines Bluetooth-Koexistenzmodus und/oder eines ZigBee-Koexistenzmodus.

In einer weiteren vorteilhaften Ausführungsform weist das erfindungsgemäße Haushaltsgerät ein Funkmodul zur Kommunikation über das Kommunikationsnetzwerk auf. Die Steuerung des Haushaltsgeräts ist vorzugsweise dazu eingerichtet, in dem Koexistenzmodus die dem Netzteil vorgegebene Leistung für den Betrieb des Magnetrons zeitweise derart zu reduzieren, dass dem Funkmodul während des Betriebs des Magnetrons der Empfang von Beacon-Frames aus dem Funknetzwerk ermöglicht wird. Dadurch, dass dem Funkmodul während des Betriebs des Magnetrons der Empfang von Beacon-Frames aus dem Funknetzwerk ermöglicht wird, kann die Verbindung des Haushaltsgeräts zu dem Funknetzwerk gewährleistet werden. Das Risiko von Verbindungsunterbrechungen oder Kommunikationsproblemen wird somit erheblich reduziert. Das Funkmodul ist beispielsweise ein WLAN-Modul.

In einer Weiterbildung des erfindungsgemäßen Haushaltsgeräts ist die Steuerung dazu eingerichtet, einen Verbindungsverlust des Funkmoduls zu dem Funknetzwerk festzustellen und die dem Netzteil vorgegebene Leistung für den Betrieb des Magnetrons nach der Feststellung des Verbindungsverlusts zeitweise derart zu reduzieren, dass die Verbindung des Funkmoduls zu dem Funknetzwerk wiederhergestellt wird. Durch diese Steuerungsroutine wird ein Feedback-Kanal umgesetzt, mit welchem die Kommunikationsfähigkeit des Haushaltsgeräts in dem Funknetzwerk überwachbar und, falls erforderlich, wiederherstellbar ist. Beispielsweise kann durch die Steuerungsroutine festgestellt werden, dass die Zeitfenster, in welchen die Leistung für den Betrieb des Magnetrons reduziert ist, zu klein sind, um eine störungsfreie Kommunikation umsetzen zu können. In diesem Fall können die Zeitfenster, in welchen die Leistung für den Betrieb des Magnetrons reduziert ist, vergrößert werden. Alternativ oder zusätzlich kann durch die Steuerungsroutine festgestellt werden, dass die Zeitspannen zwischen den Zeitfenstern, in welchen die Leistung für den Betrieb des Magnetrons nicht reduziert ist, zu lang sind, um eine störungsfreie Kommunikation umsetzen zu können. In diesem Fall können die Zeitspannen, in welchen die Leistung für den Betrieb des Magnetrons nicht reduziert ist, verkürzt werden. Alternativ oder zusätzlich kann durch die Steuerungsroutine festgestellt werden, dass die Reduzierung der Leistung für den Betrieb des Magnetrons während der Zeitfenster nicht ausreichend ist, um eine störungsfreie Kommunikation umsetzen zu können. In diesem Fall kann die Reduzierung der Leistung für den Betrieb des Magnetrons während der Zeitfenster intensiviert werden.

In einer anderen bevorzugten Ausführungsform ist das erfindungsgemäße Haushaltsgerät ein Solo-Mikrowellengerät oder ein Mikrowellengerät mit zusätzlicher Backofen- oder Dampfgarfunktion.

Die der Erfindung zugrundeliegende Aufgabe wird ferner durch ein Verfahren der eingangs genannten Art gelöst, wobei im Rahmen des erfindungsgemäßen Verfahrens ein zeitweises Reduzieren der Leistung für den Betrieb des Magnetrons in einem Koexistenzmodus der Steuerung erfolgt, sodass eine Störung der Kommunikation in einem Beacon-Frames verwendenden Funknetzwerk durch die von dem Magnetron erzeugten Mikrowellen reduziert oder verhindert wird. Das Verfahren wird vorzugsweise zum Steuern des Betriebs eines Haushaltsgeräts nach einer der vorstehend beschriebenen Ausführungsformen ausgeführt. Hinsichtlich der Vorteile und Modifikationen des erfindungsgemäßen Verfahrens wird somit zunächst auf die Vorteile und Modifikationen des erfindungsgemäßen Haushaltsgeräts verweisen.

In einer bevorzugten Ausführungsform des erfindungsgemäßen Verfahrens erfolgt ein selbsttätiges Aktivieren des Koexistenzmodus der Steuerung durch das Haushaltsgerät bei dessen Einschaltung. Alternativ wird der Koexistenzmodus der Steuerung während des Betriebs des Haushaltsgeräts oder während des Betriebs des Magnetrons durch einen Benutzer aktiviert. Ferner kann der Koexistenzmodus der Steuerung des Haushaltsgeräts bei der Erfassung einer Notwendigkeit der Einstellung des Koexistenzmodus der Steuerung zur Vermeidung einer Störung der Kommunikation in dem Funknetzwerk durch das Haushaltsgerät selbsttätig aktiviert werden.

In einer Weiterbildung des erfindungsgemäßen Verfahrens erfolgt das zeitweise Reduzieren der Leistung für den Betrieb des Magnetrons in dem Koexistenzmodus der Steuerung durch das Reduzieren der Leistung für den Betrieb des Magnetrons während mehrerer zeitlich beabstandeter Zeitfenster, wobei die zeitlich beabstandeten Zeitfenster und/oder die Zeitspannen zwischen den Zeitfenstern vorzugsweise mit einem Zufallszeitfenster überlagert werden.

Nachfolgend werden bevorzugte Ausführungsformen der Erfindung unter Bezugnahme auf die beiliegenden Zeichnungen näher erläutert und beschrieben. Dabei zeigen:
- Fig. 1: eine Ausführungsform des erfindungsgemäßen Haushaltsgeräts in einer schematischen Darstellung; und
- Fig. 2: den Verlauf der dem Netzteil vorgegebenen Leistung für den Betrieb des Magnetrons in einer schematischen Darstellung.

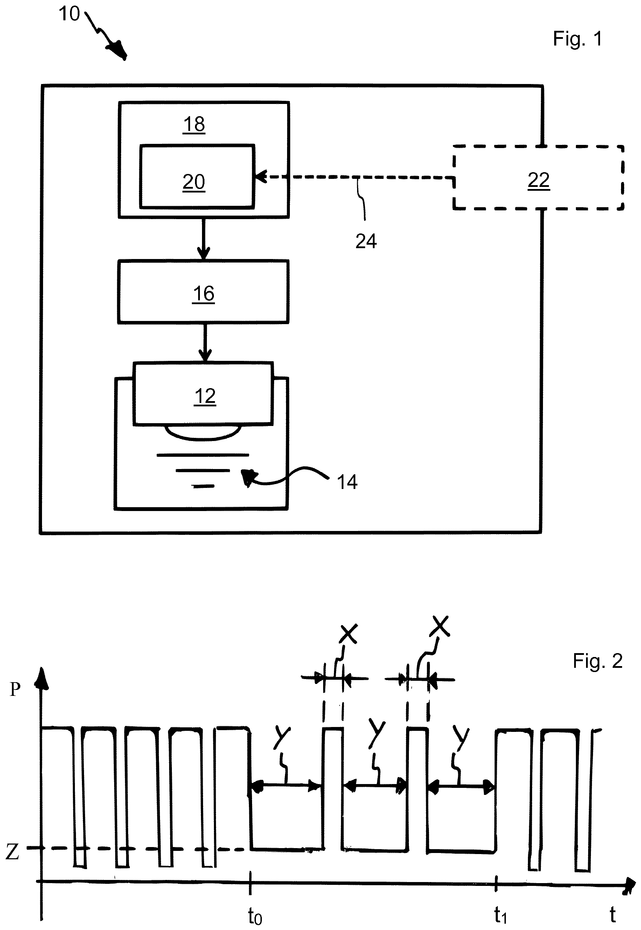

Die Fig. 1 zeigt ein Haushaltsgerät 10, welches beispielsweise ein Solo-Mikrowellengerät oder ein Mikrowellengerät mit zusätzlicher Backofen- oder Dampfgarfunktion sein kann.

Das Haushaltsgerät 10 umfasst ein Magnetron 12, ein Netzteil 16 und eine Steuerung 18. Das Magnetron 12 ist dazu eingerichtet, im Betrieb Mikrowellen 14 im 2.4 GHz ISM-Band zu erzeugen. Die Steuerung 18 des Haushaltsgeräts 10 gibt dem als Schaltnetzteil ausgebildeten Netzteil 16 die Leistung vor, mit der das Magnetron 12 betrieben werden soll.

Die Steuerung 18 beinhaltet einen Koexistenz-Algorithmus 20. Der Koexistenz-Algorithmus 20 wird bei Notwendigkeit oder manuell durch einen Benutzer aktiviert. Alternativ kann der Koexistenz-Algorithmus 20 auch standardmäßig aktiviert sein. Der Koexistenz-Algorithmus 20 sorgt dafür, dass die Mikrowellenleistung P zeitweise reduziert bzw. gezielt so abgeschaltet wird, dass ein WLAN-Access Point eines Funknetzwerkes mit einer gewissen Wahrscheinlichkeit in der Lage ist, Beacon-Frames erfolgreich zu versenden und ein anderes Gerät in dem als WLAN-Netzwerk ausgebildeten Funknetzwerk die versendeten Beacon-Frames trotz der von dem Magnetron 12 erzeugten Mikrowellen 14 empfängt. Das Funknetzwerk kann alternativ zu WLAN auch auf einer anderen 2.4 GHz-Technologie, wie etwa ZigBee oder Bluetooth, basieren.

Durch die temporäre Leistungsreduzierung werden somit Störungen in der Kommunikation der Geräte in dem Funknetzwerk verringert oder vermieden. Der Koexistenz-Algorithmus 20 erlaubt also die Kommunikation innerhalb des Funknetzwerkes bei gleichzeitigem Mikrowellenbetrieb.

Das Haushaltsgerät 10 umfasst ferner ein Funkmodul 22, mittels welchem das Haushaltsgerät 10 selbst über das Funknetzwerk mit anderen Geräten kommunizieren kann. Das Funkmodul 22 ist vorliegend als WLAN-Modul ausgebildet. Die Steuerung 18 ist dazu eingerichtet, in dem Koexistenzmodus, in welchem der Koexistenz-Algorithmus 20 eingesetzt wird, die dem Netzteil 16 vorgegebene Leistung P für den Betrieb des Magnetrons 12 zeitweise derart zu reduzieren, dass dem Funkmodul 22 während des Betriebs des Magnetrons 12 der Empfang von Beacon-Frames aus dem Funknetzwerk ermöglicht wird. Durch den Koexistenz-Algorithmus 20 verringert oder vermeidet das Haushaltsgerät 10 eine durch die Mikrowellen 14 verursachte Störung der eigenen Kommunikation.

Außerdem ist die Steuerung 18 dazu eingerichtet, über den Feedback-Kanal 24 einen Verbindungsverlust des Funkmoduls 22 zu dem Funknetzwerk festzustellen und die dem Netzteil 16 vorgegebene Leistung P für den Betrieb des Magnetrons 12 nach der Feststellung des Verbindungsverlusts zeitweise derart zu reduzieren, dass die Verbindung des Funkmoduls 22 zu dem Funknetzwerk wiederhergestellt wird.

Die Fig. 2 zeigt die zeitweise Leistungsreduzierung durch den Koexistenz-Algorithmus 20. Die Leistung P ist über die Zeit t aufgetragen. Der Koexistenzmodus der Steuerung 18 ist zwischen den Zeitpunkten t₀ und t₁ aktiviert, sodass in dieser Zeit der Koexistenz-Algorithmus 20 angewandt wird.

Hierbei wird die Leistung P für den Betrieb des Magnetrons 12 während mehrerer zeitlich beabstandeter Zeitfenster Y auf ein Leistungsniveau Z reduziert. Die zeitlich beabstandeten Zeitfenster Y und/oder die Zeitspannen X zwischen den Zeitfenstern Y können von einem nicht dargestellten Zufallszeitfenster überlagert werden. Die Zufallszeitfenster können positiv oder negativ sein, sodass die zeitlich beabstandeten Zeitfenster Y und/oder die Zeitspannen X zwischen den Zeitfenstern Y durch die Überlagerung verlängert oder verkürzt werden können. Hierdurch kann die Quote erfolgreich übertragener Beacons und regulärer Pakete signifikant erhöht werden.

Die Zeitspannen X zwischen den Zeitfenstern Y, die Zeitfenster Y, das Niveau der reduzierten Leistung Z und die überlagerbaren Zufallszeitfenster sind konfigurierbar, so dass diese auf unterschiedliche Gerätetypen und verschiedene Funknetzwerke angepasst werden können. Optional ist es möglich, die verschiedenen Modi über ein Userinterface (UI) des Haushaltsgeräts 10 zu konfigurieren. Beispielsweise kann auf diese Weise ein WLAN-Koexistenzmodus, Bluetooth-Koexistenzmodus oder ein ZigBee-Koexistenzmodus eingestellt werden.

### Bezugszeichen

- 10: Haushaltsgerät
- 12: Magnetron
- 14: Mikrowellen
- 16: Netzteil
- 18: Steuerung
- 20: Koexistenz-Algorithmus
- 22: Funkmodul
- 24: Feedback-Kanal

- t: Zeit
- t₀, t₁: Zeitpunkte
- P: Leistung
- X: Zeitspannen
- Y: Zeitfenster
- Z: reduzierte Leistung

## Patentansprüche

1. Haushaltsgerät (10), mit
- einem Magnetron (12), welches dazu eingerichtet ist, im Betrieb Mikrowellen (14) zu erzeugen;
- einem Netzteil (16), und
- einer Steuerung (18), welche dazu eingerichtet ist, dem Netzteil (16) die Leistung für den Betrieb des Magnetrons (12) vorzugeben,
**dadurch gekennzeichnet, dass**
die Steuerung (18) dazu eingerichtet ist, in einem Koexistenzmodus in mehreren zeitlich beabstandeten Zeitfenstern (Y) die dem Netzteil (16) vorgegebene Leistung (P) für den Betrieb des Magnetrons (12) zeitweise zu reduzieren, um eine Störung der Kommunikation in einem Beacon-Frames verwendenden Funknetzwerk durch die von dem Magnetron (12) erzeugten Mikrowellen (14) zu reduzieren oder zu verhindern, wobei die Steuerung (18) dazu eingerichtet ist, in dem Koexistenzmodus die zeitlich beabstandeten Zeitfenster (Y) und/oder die Zeitspannen (X) zwischen den Zeitfenstern (Y) zufällig zu verlängern oder zu verkürzen.

2. Haushaltsgerät (10) nach Anspruch 1,
wobei das Haushaltsgerät (10) dazu eingerichtet ist, den Koexistenzmodus der Steuerung (18) selbsttätig zu aktivieren, wenn eine Notwendigkeit der Einstellung des Koexistenzmodus der Steuerung (18) zur Vermeidung einer Störung der Kommunikation in dem Funknetzwerk durch das Haushaltsgerät (10) erkannt wird.

3. Haushaltsgerät (10) nach einem der vorstehenden Ansprüche,
**gekennzeichnet durch** ein Funkmodul (22) zur Kommunikation über ein Kommunikationsnetzwerk,
wobei die Steuerung (18) dazu eingerichtet ist, in dem Koexistenzmodus die dem Netzteil (16) vorgegebene Leistung (P) für den Betrieb des Magnetrons (12) zeitweise zu reduzieren, damit dem Funkmodul (22) während des Betriebs des Magnetrons (12) der Empfang von Beacon-Frames aus dem Funknetzwerk ermöglicht wird.

4. Haushaltsgerät (10) nach Anspruch 3,
**dadurch gekennzeichnet, dass** die Steuerung (18) dazu eingerichtet ist, einen Verbindungsverlust des Funkmoduls (22) zu dem Funknetzwerk festzustellen und die dem Netzteil (16) vorgegebene Leistung (P) für den Betrieb des Magnetrons (12) nach der Feststellung des Verbindungsverlusts zeitweise derart zu reduzieren, dass die Verbindung des Funkmoduls (22) zu dem Funknetzwerk wiederhergestellt wird.

5. Haushaltsgerät (10) nach einem der vorstehenden Ansprüche,
**dadurch gekennzeichnet, dass** das Haushaltsgerät (10) ein Solo-Mikrowellengerät oder ein Mikrowellengerät mit zusätzlicher Backofen- oder Dampfgarfunktion ist.

6. Verfahren zum Steuern des Betriebs eines Haushaltsgeräts (10) nach Anspruch 5, mit den Schritten:
- Erzeugen von Mikrowellen (14) durch ein Magnetron (12) des Haushaltsgeräts (10); und
- Steuern der Leistung (P) für den Betrieb des Magnetrons (12) durch eine Steuerung (18) des Haushaltsgeräts (10), und **gekennzeichnet durch**
- zeitweises Reduzieren der Leistung (P) für den Betrieb des Magnetrons (12) in einem Koexistenzmodus der Steuerung (18), um eine Störung der Kommunikation in einem Beacon-Frames verwendenden Funknetzwerk durch die von dem Magnetron (12) erzeugten Mikrowellen (14) zu reduzieren oder zu verhindern, wobei das zeitweise Reduzieren der Leistung (P) für den Betrieb des Magnetrons (12) in dem Koexistenzmodus der Steuerung (18) durch das Reduzieren der Leistung (P) für den Betrieb des Magnetrons (12) während mehrerer zeitlich beabstandeter Zeitfenster (Y) erfolgt, wobei die zeitlich beabstandeten Zeitfenster (Y) und/oder die Zeitspannen (X) zwischen den Zeitfenstern (Y) zufällig verlängert oder verkürzt werden.

7. Verfahren nach Anspruch 6,
umfassend den Schritt:
- selbsttätiges Aktivieren des Koexistenzmodus der Steuerung (18) des Haushaltsgeräts (10) bei der Erfassung einer Notwendigkeit der Einstellung des Koexistenzmodus der Steuerung (18) zur Vermeidung einer Störung der Kommunikation in dem Funknetzwerk durch das Haushaltsgerät (10).

8. Verfahren nach Anspruch 6 oder 7, wobei das Haushaltsgerät 10) ein Funkmodul (22) zur Kommunikation über ein Kommunikationsnetzwerk umfasst, wobei das Verfahren den Schritt umfasst, einen Verbindungsverlust des Funkmoduls (22) zu dem Funknetzwerk festzustellen und die dem Netzteil (16) vorgegebene Leistung (P) für den Betrieb des Magnetrons (12) nach der Feststellung des Verbindungsverlusts zeitweise zu reduzieren, um die Verbindung des Funkmoduls (22) zu dem Funknetzwerk wiederherzustellen

## Claims

1. Domestic appliance (10), comprising:
- a magnetron (12) which is designed to generate microwaves (14) during operation;
- a power supply (16); and
- a controller (18), which is designed to specify to the power supply (16) the power for operating the magnetron (12);
**characterised in that**
the controller (18) is designed, in a coexistence mode in a plurality of temporally spaced-apart time windows (Y), to temporarily reduce the power (P) specified to the power supply (16) for operating the magnetron (12) in order to reduce or prevent disruption to the communication in a radio network that uses beacon frames by the microwaves (14) generated by the magnetron (12), the controller (18) being designed, in the coexistence mode, to randomly lengthen or shorten the temporally spaced-apart time windows (Y) and/or the time periods (X) between the time windows (Y).

2. Domestic appliance (10) according to claim 1,
wherein the domestic appliance (10) is designed to automatically activate the coexistence mode of the controller (18) when a need is identified to set the coexistence mode of the controller (18) to prevent disruption to the communication in the radio network by the domestic appliance (10).

3. Domestic appliance (10) according to any of the preceding claims,
**characterised by** a radio module (22) for communication via a communication network,
the controller (18) being designed, in the coexistence mode, to temporarily reduce the power (P) specified to the power supply (16) for operating the magnetron (12), so that the radio module (22) is allowed to receive beacon frames from the radio network during operation of the magnetron (12).

4. Domestic appliance (10) according to claim 3,
**characterised in that** the controller (18) is designed to determine a loss of connection between the radio module (22) and the radio network and, after determining the loss of connection, to temporarily reduce the power (P) specified to the power supply (16) for operating the magnetron (12) in such a way that the connection of the radio module (22) to the radio network is restored.

5. Domestic appliance (10) according to any of the preceding claims,
**characterised in that** the domestic appliance (10) is a solo microwave appliance or a microwave appliance having an additional oven or steam cooking function.

6. Method for controlling the operation of a domestic appliance (10) according to claim 5, comprising the following steps:
- generating microwaves (14) by a magnetron (12) of the domestic appliance (10); and
- controlling the power (P) for operating the magnetron (12) by a controller (18) of the domestic appliance (10); and **characterised by**
- temporarily reducing the power (P) for operating the magnetron (12) in a coexistence mode of the controller (18) in order to reduce or prevent disruption to the communication in a radio network that uses beacon frames by the microwaves (14) generated by the magnetron (12), the temporary reduction of the power (P) for operating the magnetron (12) in the coexistence mode of the controller (18) being carried out by reducing the power (P) for operating the magnetron (12) during a plurality of temporally spaced-apart time windows (Y), the temporally spaced-apart time windows (Y) and/or the time periods (X) between the time windows (Y) being lengthened or shortened at random.

7. Method according to claim 6,
comprising the following step:
- automatically activating the coexistence mode of the controller (18) of the domestic appliance (10) when a need is identified to set the coexistence mode of the controller (18) to prevent disruption to the communication in the radio network by the domestic appliance (10).

8. Method according to either claim 6 or claim 7, wherein the domestic appliance (10) comprises a radio module (22) for communication via a communication network, the method comprising the step of determining a loss of connection between the radio module (22) and the radio network and, after determining the loss of connection, temporarily reducing the power (P) specified to the power supply (16) for operating the magnetron (12) in order to restore the connection of the radio module (22) to the radio network.

## Revendications

1. Appareil ménager (10), comportant
- un magnétron (12) qui est configuré pour générer des micro-ondes (14) pendant le fonctionnement ;
- une alimentation électrique (16), et
- un dispositif de commande (18) qui est configuré pour spécifier la puissance pour
l'alimentation électrique (16) pour le fonctionnement du magnétron (12),
**caractérisé en ce que**
le dispositif de commande (18) est configuré pour réduire temporairement la puissance (P) spécifiée pour l'alimentation électrique (16) pour le fonctionnement du magnétron (12) dans un mode de coexistence dans une pluralité de fenêtres temporelles (Y) espacées dans le temps afin de réduire ou d'empêcher une perturbation de la communication dans un réseau radio utilisant des trames balises par des micro-ondes (14) générées par le magnétron (12), le dispositif de commande (18) étant configuré pour prolonger ou pour raccourcir de manière aléatoire les fenêtres temporelles (Y) espacées dans le temps et/ou les intervalles de temps (X) entre les fenêtres temporelles (Y).

2. Appareil ménager (10) selon la revendication 1,
dans lequel l'appareil ménager (10) est configuré pour activer automatiquement le mode de coexistence du dispositif de commande (18) lorsqu'il est nécessaire de régler le mode de coexistence du dispositif de commande (18) pour éviter une perturbation de la communication dans le réseau radio par l'appareil ménager (10).

3. Appareil ménager (10) selon l'une des revendications précédentes,
**caractérisé par** un module radio (22) pour la communication par l'intermédiaire d'un réseau de communication,
dans lequel le dispositif de commande (18) est configuré pour réduire temporairement la puissance (P) spécifiée pour l'alimentation électrique (16) pour le fonctionnement du magnétron (12) dans le mode de coexistence, de sorte que la réception de trames balises provenant du réseau radio par le module radio (22) est permise pendant le fonctionnement du magnétron (12).

4. Appareil ménager (10) selon la revendication 3,
**caractérisé en ce que** le dispositif de commande (18) est configuré pour déterminer une perte de connexion du module radio (22) au réseau radio et pour réduire temporairement la puissance (P) spécifiée pour l'alimentation électrique (16) pour le fonctionnement du magnétron (12) après la détermination de la perte de connexion, de telle sorte que la connexion du module radio (22) au réseau radio est rétablie.

5. Appareil ménager (10) selon l'une des revendications précédentes,
**caractérisé en ce que** l'appareil ménager (10) est un appareil à micro-ondes simple ou un appareil à micro-ondes avec une fonction supplémentaire four ou cuisson vapeur.

6. Procédé permettant la commande du fonctionnement d'un appareil ménager (10) selon la revendication 5, comportant les étapes :
- de génération de micro-ondes (14) par un magnétron (12) de l'appareil ménager (10) ; et
- de commande de la puissance (P) pour le fonctionnement du magnétron (12) par un dispositif de commande (18) de l'appareil ménager (10), et **caractérisé par**
- de réduction temporaire de la puissance (P) pour le fonctionnement du magnétron (12) dans un mode de coexistence du dispositif de commande (18) afin de réduire ou d'empêcher une perturbation de la communication dans un réseau radio utilisant des trames balises par les micro-ondes (14) générées par le magnétron (12), de réduction temporaire de la puissance (P) pour le fonctionnement du magnétron (12) dans le mode de coexistence du dispositif de commande (18) s'effectuant en réduisant la puissance (P) pour le fonctionnement du magnétron (12) pendant plusieurs fenêtres temporelles (Y) espacées dans le temps, les fenêtres temporelles (Y) espacées dans le temps et/ou les intervalles de temps (X) entre les fenêtres temporelles (Y) étant prolongés ou raccourcis de manière aléatoire.

7. Procédé selon la revendication 6,
comprenant l'étape :
- d'activation automatique du mode de coexistence du dispositif de commande (18) de l'appareil ménager (10) lorsqu'il est nécessaire de régler le mode de coexistence du dispositif de commande (18) pour éviter une perturbation de la communication dans le réseau radio par l'appareil ménager (10).

8. Procédé selon la revendication 6 ou 7, dans lequel l'appareil ménager (10) comprend un module radio (22) pour la communication par l'intermédiaire d'un réseau de communication, le procédé comprenant l'étape de détermination d'une perte de connexion du module radio (22) au réseau radio et de réduction temporaire de la puissance (P) spécifiée pour l'alimentation électrique (16) pour le fonctionnement du magnétron (12) après la détermination de la perte de connexion afin de rétablir la connexion du module radio (22) au réseau radio.
